# EUROPEAN PATENT APPLICATION

(11) **EP 4 692 627 A1**
(43) Date of publication of application: **11.02.2026**
(21) Application number: 25188010.0
(22) Date of filing: 08.07.2025
(51) Int. Cl.: F16L 55/38, F16L 55/44, F16L 101/10, F16L 101/30, F16L 101/60, F16L 55/36

(54) **CRAWLER ROBOT**

(30) Priority: 08.08.2024 GB 202411665
(71) Applicant: Rolls-Royce plc, London N1 9FX (GB)
(72) Inventor: Atia, Mohamed Ghareb Buomy, Derby, DE24 8BJ (GB); Norton, Andrew D, Derby, DE24 8BJ (GB); Sun, Erhui, Derby, DE24 8BJ (GB); Dong, Xin, Derby, DE24 8BJ (GB); Mohammad, Abdelkhalick, Derby, DE24 8BJ (GB); Axinte, Dragos A, Derby, DE24 8BJ (GB)
(74) Representative: Rolls-Royce plc

(57) **Abstract**

A crawler robot (201) has a proximal end section (202), a distal end section (203) and a core section (204). Each of the proximal end section (202), the distal end section (203) and core section (204) has a hollow core (207). The core section (204) has a flexible body and is surrounded by at least one balloon (206) that is supplied by a fluid carrying conduit. The proximal end section (202) and the distal end section (203) are connected to fluid carrying conduits and have at least three thrust vents (205) each for venting the supplied fluid to generate a thrust force.

## Description

### FIELD

The disclosure relates to a crawler robot that is able to propel itself along a body in a controlled way. The disclosure also relates to a method of controlling a crawling robot along a body.

### BACKGROUND

Inspection, cleaning, working in and the repairing of complex systems is inherently difficult; this is due to the inaccessibility of certain components and restrictions in access for necessary tools. Stripping and rebuilding complex components is expensive, time and labour consuming. Therefore, new systems need to be developed that can take the tool to the correct position and/or support the tool at the correct position.

Snake like robotic systems such as borescopes, continuum robots are being developed and improved for inspection and repair systems, but these can be expensive and have issues with controllable insertion into the workspace. Furthermore, the utility of robotic arms is usually limited to the end effector, as such inspection of the surface of pipes and conduits is difficult. In cleaning, a conduit carrying a fluid may need to be positioned and fixed in the correct place to allow for the high-pressure fluid to be jetted out in order to clean the target location. Inspection systems such as electrical probes may need to be delivered through a pipe to test the surface of the pipe or the contents within.

In all these systems, the difficulties arise from the operator having to move the body (the robot arm, pipe/conduit, or robotic sensor) in a controlled way within the confined space so that it can be fixed into the position to allow the body to be able to perform its required task.

There is limited knowledge and use of fixturing, such as balloons or arms, positioned on robotic bodies. However, these are all fixed in position and so the controllability of the fixturing attachment is not optimized, therefore the number of tasks that the robot can perform is limited. Similarly, there is very little use of fixturing means on other bodies that are inserted into a confined workspace, and as such the body is not always in the optimum position or hold for the task.

In all the cases featuring a balloon the controllability of the positioning of the balloon prior to inflation is limited. This means that the body is not in the optimum place, with respect to the task or the workspace to perform the desired task.

It is therefore desirable to develop robotic systems that can move along a body and that are able to lock the body in place at a desired position.

### SUMMARY

The scope of the disclosure is set out in the appended claims.

In a first aspect there is provided a crawler robot comprising a proximal end section, a distal end section and a core section, each of the proximal end section, the distal end section and the core section has a hollow core, the core section being flexible and surrounded by at least one balloon that is supplied by a fluid carrying conduit, the proximal end section and the distal end section are connected to fluid carrying conduits and have at least three thrust vents each for venting the supplied fluid to generate a thrust force.

The at least three thrust vents on the proximal end section may direct the fluid towards the distal end section, and the at least three thrust vents on the distal end section may direct the fluid towards the proximal end section.

The proximal end section may have at least three thrust vents that are directed away from the crawler robot in a proximal end direction, and the distal end section has at least three thrust vents that are directed away from the crawler robot in a distal end direction.

The proximal end section and the distal end section may be made from a resiliently deformable material, for example this may be silicone, or other plastic, rubber or rubber like material.

The flexible core section may be made from a resiliently deformable material, for example this may be silicone, or other plastic, rubber or rubber like material.

The thrust vents on the proximal and distal end section may be shaped to be convergent-divergent nozzles.

There may be more than one balloon present surrounding the body of the core section.

The crawler robot may be connected to a body in a fixed position, and wherein the body passes through the hollow core of the crawler robot.

The crawler robot may have a body positioned through the hollow core of the crawler robot, and wherein the crawler robot is able to move along the length of the body.

At least one sensor may be connected to the proximal end section and/or distal end section of the crawler robot.

The sensor may be at least one or more of camera systems comprising at least one camera, touching probes (e.g., eddy current sensors), electrical probes, positional or movement sensors.

In a second aspect there is provided a method of moving a crawler robot along a body, the crawler robot being a crawler robot of the first aspect, the method comprising the steps of: inserting a body with a crawler robot into a workspace; and applying a high pressure fluid to the proximal end section and/or distal end section to move the crawler robot from a first position to at least a second position, in the at least second position at least one of the balloons is inflated and a task is performed.

Once the crawler robot has moved to its at least second position it may take a measurement using its at least one sensor.

The method may comprise inserting the system into the workspace, applying a fluid under pressure to the thrust vents on the proximal end section and/or the distal end section to move the system from a first position to at least a second position, when in the second position the supply of fluid to the thrust vents is stopped and the at least one balloon is inflated, and using the system to perform at least one task.

As the system moves from the first position to the at least second position the sensors of the crawler robot may be used to take one or more physical properties measurements of the workspace and/or the position or movement of the crawler robot.

The balloon may be deflated, and fluid pressure is applied to the distal end section and/or the proximal end section to move the system towards an entrance aperture for the workspace.

In a third aspect there is provided a method of moving a system comprising a body and a crawler robot of the first aspect, the method comprising the steps of: inserting the system into the workspace; applying a fluid under pressure to the thrust vents on the proximal end section and/or the distal end section to move the system from a first position to at least a second position, when in the second position the supply of fluid to the thrust vents is stopped and the at least one balloon is inflated; and using the system to perform at least one task.

As the system moves from the first position to the at least second position the sensors of the crawler robot may take one or more physical properties measurements of the workspace and/or the position or movement of the crawler robot.

Once the at least one task has been performed, the balloon may be deflated, and fluid pressure may be applied to the distal end section and/or the proximal end section to move the system towards an entrance aperture for the workspace.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**FIG. 1** presents an example of the use of a propelled robot according to the present disclosure;
**FIG. 2a** presents a cross section of a crawler robot according to the present disclosure;
**FIG. 2b** presents a perspective view of the crawler robot of FIG. 2a;
**FIG. 3** presents a cross section of an end section of the system;
**FIG. 4** presents an example of a crawler robot attached to a body within a workspace;
**FIG. 5** presents a flow chart of the operation of the crawler robot; and
**FIG. 6** presents an alternative design of either the proximal end section or the distal end section of the crawler robot.

### DETAILED DESCRIPTION

Aspects and embodiments of the present disclosure will now be discussed with reference to the accompanying figures. Further aspects and embodiments will be apparent to those skilled in the art.

Complex systems featuring pipes and conduits mean that the workspace is confined. Often these confined workspaces feature components that need inspecting, repairing and cleaning. In order to do this a body is inserted into the complex system. Typically, these bodies are flexible, in certain cases they may be flexible robotic arms such as borescopes or continuum robots, in other cases it may be a flexible conduit through which a fluid will be pumped to clean part of the component. With any of these systems it is difficult to firstly get the body into the correct position to perform the task and then to support the body during the operation. Means of insertion of bodies into a workspace is either using a motorized controller or more typically by an operator manually inserting it. Due to the flexible nature of the body the accuracy of the insertion is often lower than is desired, this is due to the slack created by the flexible nature of the body. This reduction in accuracy means that it can be difficult to support the tool correctly for the job, as such a support system needs to be developed that can hold the body in the correct position to do the task required. This can be through being positioned correctly on the body prior to insertion and using a crawler robot to move the body to the correct position within the workspace. Alternatively, the robot can be placed on the body and can crawl itself into position to hold the body for the task. In certain inspection cases the crawler robot may support at least one or more sensors that can be moved along the surface of the workspace. Suitable sensors may be camera systems, touching probes (e.g., eddy current sensors), electrical probes, temperature probes, positional or movement sensors.

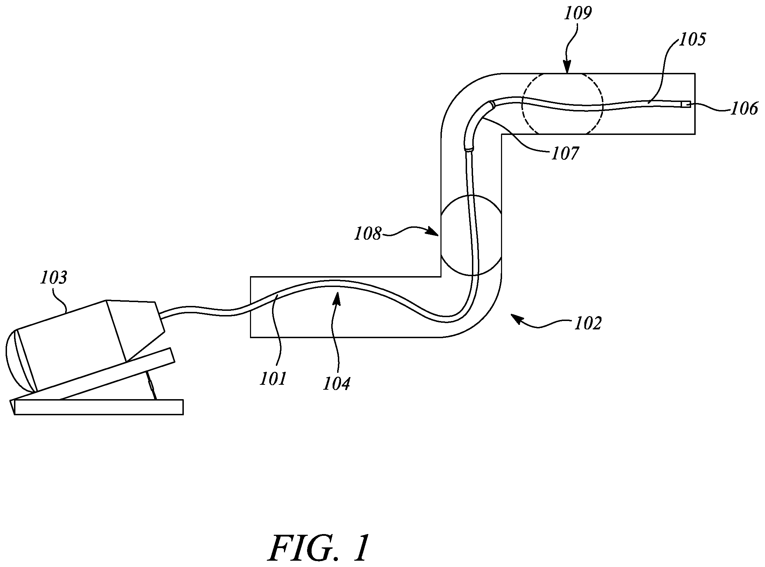

**FIG. 1** presents an example of the use of a propelled robot according to the present disclosure. In FIG. 1 a body 101, which in this case is a continuum robot, is fed into a workspace 102. In the case of FIG. 1, the workspace is shown having a complex curved shape. The continuum robot is connected to an actuator pack 103; this is able to control the joints of the active section of the continuum robot by adjusting the tensions of tendons that run through the arm of the robot. The continuum arm robot itself comprises a passive section 104, an active section 105 and an end effector 106. The passive section comprises a deformable length through which the conduits and tendon cables for the active section and actuator run. The crawler robot 107 is positioned around the body, which in this case is the continuum arm robot. In the example the crawler robot is positioned on the passive section of the continuum robot. The crawler robot sits around the body and is not fixedly connected to it to allow the crawler robot to move along the continuum arm robot. This means that all the cables, tendons and conduits that are used to control a flexible robotic arm are not affected as they can remain within the robotic arm body. The crawler robot comprises at least one inflatable balloon that allows the body to be fixed in position relative to its surroundings. In FIG. 1 the robotic arm is inserted into the workspace and the crawler robot sits at a first position on the robotic arm. The crawler robot is then moved from the first position 108 to a second position 109 by controlling its movement; this allows the fixturing balloon to propel itself in an intended direction, to a second position. From this second position the body will be able to perform the desired task. From the second position the crawler robot may then be moved to a third or further locations or may be retracted. Once the task has been performed the body along with the crawler robot may be removed from the workspace. The body in this example is presented as a robotic arm, but it may be a rod, tube or rail that can be rigid or flexible that is able to be inserted into the workspace so that the crawler robot can move along it. Furthermore, although the example presents the case for the crawler robot being used to assist in fixturing the robotic arm in position it may also be equipped with sensors including at least one camera and can provide a signal of properties of the pipe or conduit through which the crawler robot is moving. The crawler robot may also be attached to the body and be used for dragging the body through the workspace.

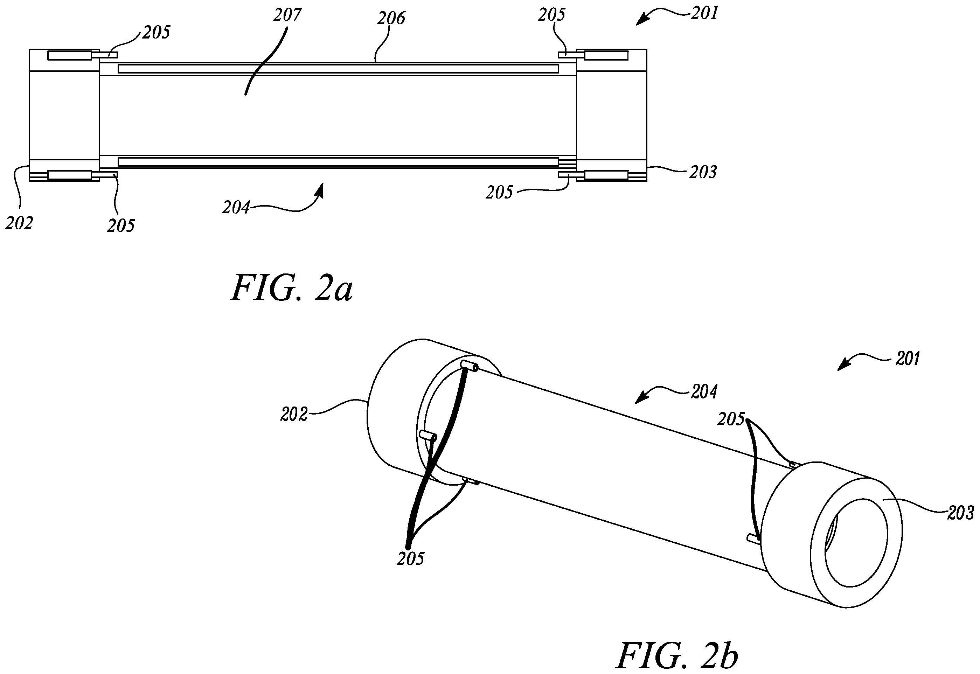

**FIG. 2a** presents a cross section of a crawler robot 201 according to the present disclosure. In this the crawler robot comprises a hollow core 207 through which a body can be placed. The body may be a rail, tube, pipe or the arm of a flexible robotic device. The crawler robot comprises a core section 204, that is flexible. The core section may be formed of a resiliently deformable material such as silicone, rubber, plastics or a rubber like material. Surrounding the core section is an inflatable balloon structure comprising at least one balloon 206. The inflatable balloon structure may cover the entire core section or may only cover a portion of this. The flexible core section 204 may be surrounded by more than one inflatable balloon. If the system has more than one inflatable balloon, then they may have different expansion rates that allow them to be securely fixed within different sized workspaces. Attached to the core section are a proximal end section 202 and a distal end section 203. The proximal end section and the distal end section are both made form a resiliently deformable material such as silicone, rubber, plastics or a rubber like material. The proximal end section and the distal end section are supplied with conduits connected to pumps to supply a fluid under pressure. The proximal end section and distal end section also feature at least three thrust vents 205. The thrust vents allow for an exit for the fluid that has been supplied along the conduits, generating a thrust force.

**FIG. 2b** presents a perspective view of the crawler robot 201 of FIG. 2a. The proximal end section 202 and the distal end section 203 feature the hollow structure of the flexible core 204. In this case the structure is annular. However, the hollow shape may be changed to conform to the shape of the body along which the crawler robot is positioned. The system also shows an example of the thrust vents 205 of the proximal end section 202 and the distal end section 203. In the example presented in FIG. 2b the system features 4 thrust vents 205 on the proximal end section and 4 thrust vents on the distal end section. In both these cases the 4 vents are equally distributed around the proximal end section and distal end section. The thrust vents are shown extending form the proximal end section and distal end section, however, the vents may also be flush within the proximal end section and the distal end section. The proximal end section and distal end section need at least three thrust vents to allow for a balanced force to be used as the vents propel the crawler robot along the body or propel the crawler robot and the body along.

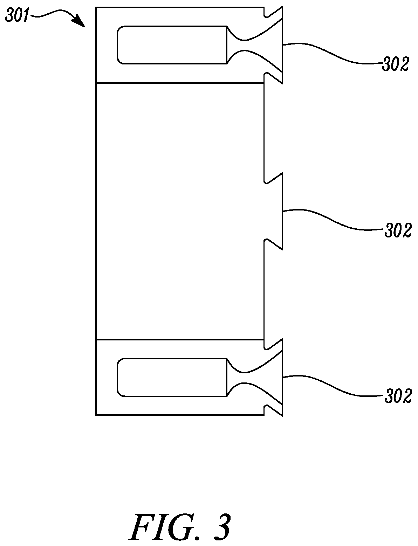

**FIG. 3** presents a cross section of an end section 301 of the system. The cross section shows a cut through of two of the thrust vents 302 with a third thrust vent being shown at the back of the end section. The cut through of the thrust vent shows how the vent is profiled to affect the flow of fluid through the vent. The profiling of the vent means that the vent 302 is a convergent-divergent nozzle. Such a design allows for the air that is passed along the conduits to the end section to be compressed as it enters the narrow section of the vent, then as it passes into the wider exhaust section it expands and accelerates it increases the thrust from the vent. This is just an example of a shape of such a nozzle, other configurations would be apparent to the person skilled in the art.

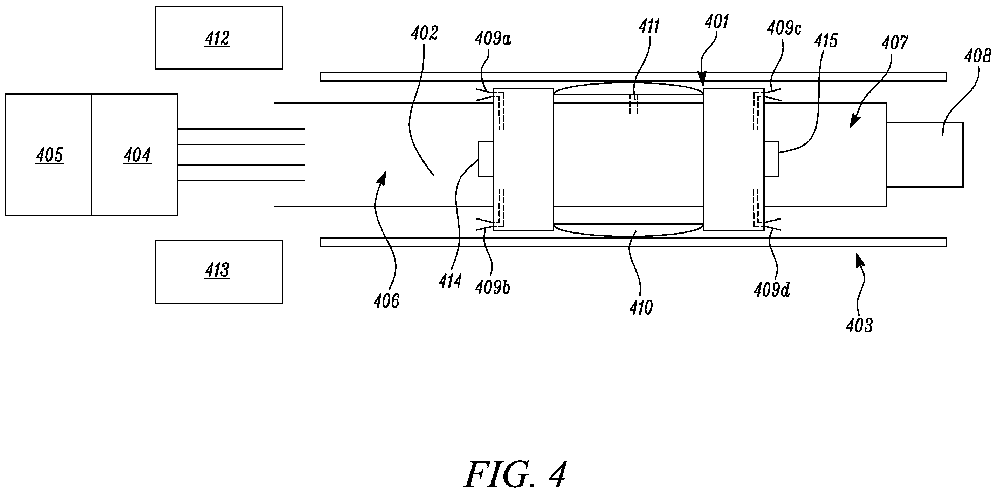

**FIG. 4** presents an example of a crawler robot 401 attached to a body 402 within a workspace 403. In FIG. 4, the body 402 is a continuum arm robot. The body, with the crawler robot attached (i.e. with the crawler robot connected to the body), is inserted into the workspace 403. The body, being a continuum arm robot is provided with an actuator pack 404 and controller 405 that is outside of the workspace. The body features a passive section 406, an active section 407 and an end effector 408. The passive section is a flexible section that allows the conduits and tendons that are used for the active section and the end effector to pass through. The active section is controlled by the actuator pack through the use of the controlled movement of tendons. The end effector may be controlled by mechanical control and/or electrical signals as would be apparent to the person skilled in the art. In the example the crawler robot is mounted between the active section 407 and passive section 406 of the continuum arm robot. The crawler robot in such a case can be used to move the continuum arm robot through the workspace to be in the desired position. The air is supplied to the jets using conduits 409a,b,c,d, that pass through the body of the continuum arm robot. The jet supply conduits may have one supply line to jets 409a,b and a second supply line to 409c,d with a split flow fitting being attached to the conduit. Once in the desired position the balloon 410 can be inflated to fix the continuum arm robot in position. Air is supplied to the balloon using a conduit 411, which passes along the body of the continuum arm robot. In this state the active part of the continuum robot and the end effector can be used to perform the desired task. The fluid may be supplied to the balloon using a pump 412. The fluid may be supplied to the jets 409a,b,c,d from a pump 413. With the continuum robot arm fixed in place the continuum robot is secure whilst the task is being performed. Once the task has been performed the balloon can be deflated and the continuum robot can be moved to a second position to perform another task or can be withdrawn from the workspace; this could be done by using the crawler robot to move the continuum robot to a safe position to be withdrawn by the operator. Sensors 414 and 415 are provided on the proximal and distal end of the crawler robot respectively.

As discussed above the crawler robot may feature sensors such as at least one camera. The sensors can be positioned at any suitable point upon the crawler robot body. For example, the body may be connected to the proximal or distal end sections. The robot crawler may also feature pressure sensors to ensure that the crawler robot is correctly gripping the body or the wall of the workspace. The sensors may also be used to provide accurate information on the position of the crawler robot and/or any movement of the crawler robot. FIG. 4 presents an example of a crawler robot according to the disclosure featuring sensors. In the example a camera system is placed on the distal end section. Having a camera on the distal end section allows the operator to view the environment that the crawler robot is operating in. A sensor is also placed on the proximal end section. The sensor can be any suitable sensor for example an eddy current probe, a contact resistance probe, a temperature probe.

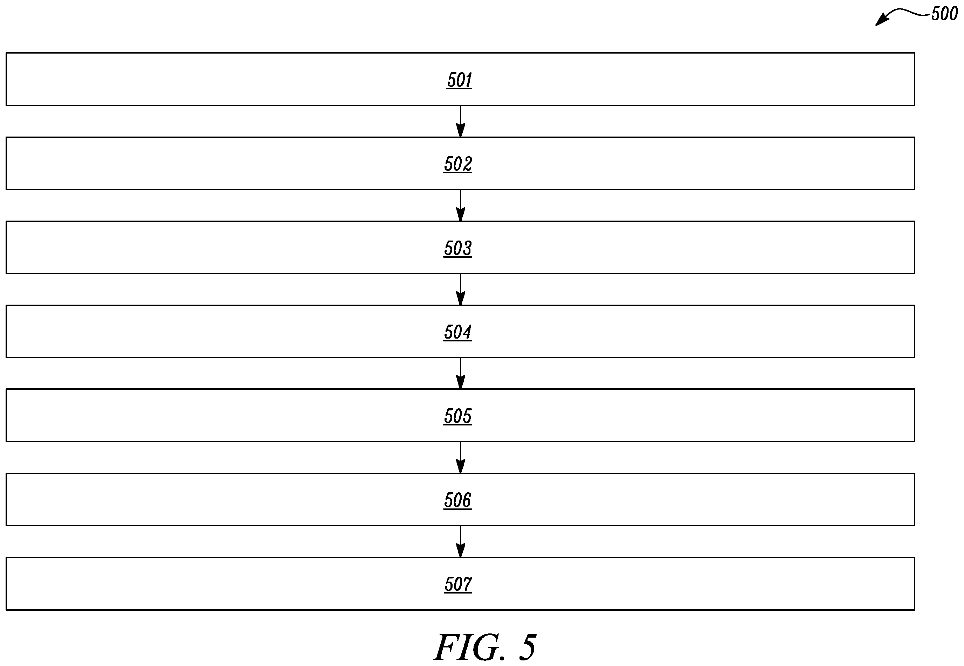

**FIG. 5** presents a flow chart of the method 500 of operation of the crawler robot. In step 501 the body is inserted into a workspace. In step 502 the body is moved into a first position. The first position may be just inside the entrance to the workspace, as such step 502 may not be necessary. In some cases, the first position will be a reasonable distance into the workspace, for example, this may be 0.2 m to 5 m or more into the workspace depending upon the nature of the workspace and the purpose of the task that the body is set to perform. In step 503 the crawler robot is activated through applying high pressure fluid to the proximal end section and/or distal end section. The application of high-pressure fluid passes through the jets, which causes a reaction force to allow the system - body and crawler robot - to move to a second position. The pressure may be between 0.1 and 15 bar. The higher the pressure the greater the thrust . In step 504 the balloon is inflated. The inflation of the balloon fixes the body in a desired position. By fixing the body in position it means that the body can counter any forces that are applied to it as the body performs its task. In step 505 the body is able to perform its desired task. In step 506 the balloon is deflated. The deflation of the balloon means that the body is no longer fixed in position, so that body can then be moved. In some cases, the body may be moved to a third and further positions and the balloon inflated again, so that the body can perform its task at further positions. In step 507 the body can then be removed from the workspace.

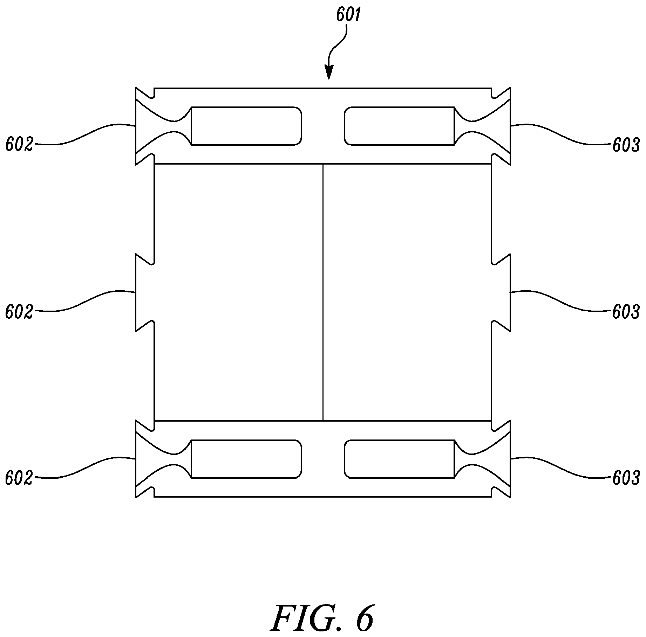

**FIG. 6** presents an alternative design of either the proximal end section 601 or the distal end section 601. In the example shown in FIG. 6 the end sections have forward thrust vents 602 and rear facing thrust vents 603. The forward-facing thrust vents for the proximal end section 601 and distal end section 601 may be supplied by the same supply of fluid along a conduit having a split to the thrust vents on the proximal and distal end section. The same configuration can be used for the rear facing vents. Such a configuration can be useful to increase the thrust provided by the crawler robot; this can allow the system - crawler robot and body - to move through the workspace. This can be particularly beneficial if the body is long and consequently has a large amount of drag as it is moved through. Once the body and/or crawler robot is in position the balloon can be inflated and the task of the body can be performed.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A crawler robot (201) comprising a proximal end section (202), a distal end section (203) and a core section (204), each of the proximal end section (202), the distal end section (203) and the core section (204) has a hollow core (207), the core section (204) being flexible and surrounded by at least one balloon (206) that is supplied by a fluid carrying conduit, the proximal end section (202) and the distal end section (203) are connected to fluid carrying conduits and have at least three thrust vents (205) each for venting the supplied fluid to generate a thrust force.

2. The crawler robot (201) of claim 1, wherein the at least three thrust vents (205) on the proximal end section (202) direct the fluid towards the distal end section (203), and the at least three thrust vents (205) on the distal end section (203) direct the fluid towards the proximal end section (202).

3. The crawler robot (201) of claim 2, wherein the proximal end section (202) has at least three thrust vents (205) that are directed away from the crawler robot (201) in a proximal end direction, and the distal end section (203) has at least three thrust vents (205) that are directed away from the crawler robot (201) in a distal end direction.

4. The crawler robot (201) of any preceding claim, wherein the proximal end section (202) and the distal end section (203) are made from a resiliently deformable material.

5. The crawler robot (201) of any preceding claim, wherein the flexible body of the core section (204) is made from a resiliently deformable material.

6. The crawler robot (201) of any preceding claim, wherein the thrust vents (205) on the proximal end section (202) and distal end section (203) are shaped to be convergent-divergent nozzles.

7. The crawler robot (201) of any preceding claim, wherein there is more than one balloon (206) surrounding the flexible core section (204).

8. The crawler robot (201) of any preceding claim, wherein the crawler robot (201) is connected to a body (402) in a fixed position, and the body (402) passes through the hollow core (207) of the crawler robot (201).

9. The crawler robot (201) according to any one of claims 1 to 7, wherein the crawler robot has a body positioned through the hollow core (207) of the crawler robot, and wherein the crawler robot is able to move along the length of the body.

10. The crawler robot (201) of any preceding claim, wherein at least one sensor is connected to the proximal end section (202) and/or distal end section (203) of the crawler robot (201).

11. A method (500) of moving a crawler robot (201) along a body, the crawler robot (201) being a crawler robot (201) of any one of claims 1 to 7 and 10 when dependent upon claims 9 and 10, the method comprising the steps of: inserting a body with a crawler robot (201) into a workspace; applying a high pressure fluid to the proximal end section (202) and/or distal end section (203) to move the crawler robot from a first position (108) to at least a second position (109), in the at least second position at least one balloon (206) is inflated and a task is performed.

12. The method (500) of claim 11, when dependent upon claim 10, wherein once the crawler robot (201) has moved to its at least second position (109) it takes a measurement using its at least one sensor.

13. A method (500) of moving a system comprising a body and a crawler robot as claimed in any one of claims 1 to 8 and 10 when dependent upon claim 8, the method comprising the steps of: inserting the system into the workspace; applying a fluid under pressure to the thrust vents on the proximal end section and/or the distal end section to move the system from a first position to at least a second position, when in the second position the supply of fluid to the thrust vents is stopped and the at least one balloon is inflated; and using the system to perform at least one task.

14. The method (500) of claim 13, wherein as the system moves from the first position to the at least second position the sensors on the crawler robot take one or more physical properties measurements of the workspace and/or the position or movement of the crawler robot.

15. The method (500) of claim 13 or 14, wherein once the at least one task has been performed, the balloon is deflated, and fluid pressure is applied to the distal end section and/or the proximal end section to move the system towards an entrance aperture for the workspace.
